# EUROPEAN PATENT APPLICATION

(11) **EP 4 730 900 A1**
(43) Date of publication of application: **22.04.2026**
(21) Application number: 25208033.8
(22) Date of filing: 10.10.2025
(51) Int. Cl.: H04W 74/0833, H04W 56/00

(54) **SYSTEMS AND METHODS FOR ENHANCING USER EXPERIENCE IN MULTIPLE TIMING ADVANCE GROUP CONFIGURATIONS**

(30) Priority: 18.10.2024 US 202418920378
(71) Applicant: Apple Inc., Cupertino, CA 95014 (US)
(72) Inventor: Vikram, Sushant, San Diego, CA (US); Ali, Gibran, San Jose, CA (US); Singh, Ajay, San Jose, CA (US)
(74) Representative: Rooney, John-Paul

(57) **Abstract**

Systems and methods for enhancing user experience in multiple timing advance group (TAG) configurations are disclosed herein. In various embodiments, a user equipment (UE) configured with a primary component carrier (PCC) of a first TAG and a secondary component carrier (SCC) of a second TAG may be configured to trigger a second random access channel (RACH) procedure on the SCC for uplink (UL) synchronization for the SCC after a failure of a first such RACH procedure. The UE may trigger the second RACH procedure upon identifying any of one or more of: that a measurement report reports an reference signal received power (RSRP) of the SCC; that a channel state information (CSI) report reports a first CSI component of the SCC that is above a threshold, and/or that a downlink (DL) throughput through the SCC has improved corresponding to a first time period.

## Description

### TECHNICAL FIELD

This application relates generally to wireless communication systems, including wireless communication systems using carrier aggregation (CA) of carriers of different timing advance groups (TAGs).

### BACKGROUND

Wireless mobile communication technology uses various standards and protocols to transmit data between a base station and a wireless communication device. Wireless communication system standards and protocols can include, for example, 3rd Generation Partnership Project (3GPP) Long Term Evolution (LTE) (e.g., 4G), 3GPP New Radio (NR) (e.g., 5G), and Institute of Electrical and Electronics Engineers (IEEE) 802.11 standard for Wireless Local Area Networks (WLAN) (commonly known to industry groups as Wi-Fi^{®}).

As contemplated by the 3GPP, different wireless communication systems' standards and protocols can use various radio access networks (RANs) for communicating between a base station of the RAN (which may also sometimes be referred to generally as a RAN node, a network node, or simply a node) and a wireless communication device known as a user equipment (UE). 3GPP RANs can include, for example, Global System for Mobile communications (GSM), Enhanced Data Rates for GSM Evolution (EDGE) RAN (GERAN), Universal Terrestrial Radio Access Network (UTRAN), Evolved Universal Terrestrial Radio Access Network (E-UTRAN), and/or Next-Generation Radio Access Network (NG-RAN).

Each RAN may use one or more radio access technologies (RATs) to perform communication between the base station and the UE. For example, the GERAN implements GSM and/or EDGE RAT, the UTRAN implements Universal Mobile Telecommunication System (UMTS) RAT or other 3GPP RAT, the E-UTRAN implements LTE RAT (sometimes simply referred to as LTE), and NG-RAN implements NR RAT (sometimes referred to herein as 5G RAT, 5G NR RAT, or simply NR). In certain deployments, the E-UTRAN may also implement NR RAT. In certain deployments, NG-RAN may also implement LTE RAT.

A base station used by a RAN may correspond to that RAN. One example of an E-UTRAN base station is an Evolved Universal Terrestrial Radio Access Network (E-UTRAN) Node B (also commonly denoted as evolved Node B, enhanced Node B, eNodeB, or eNB). One example of an NG-RAN base station is a next generation Node B (also sometimes referred to as a g Node B or gNB).

A RAN provides its communication services with external entities through its connection to a core network (CN). For example, E-UTRAN may utilize an Evolved Packet Core (EPC) while NG-RAN may utilize a 5G Core Network (5GC).

Frequency bands for 5G NR may be separated into two or more different frequency ranges. For example, Frequency Range 1 (FR1) may include frequency bands operating in sub-6 gigahertz (GHz) frequencies, some of which are bands that may be used by previous standards, and may potentially be extended to cover new spectrum offerings from 410 megahertz (MHz) to 7125 MHz. Frequency Range 2 (FR2) may include frequency bands from 24.25 GHz to 52.6 GHz. Note that in some systems, FR2 may also include frequency bands from 52.6 GHz to 71 GHz (or beyond). Bands in the millimeter wave (mmWave) range of FR2 may have smaller coverage but potentially higher available bandwidth than bands in FR1. Skilled persons will recognize these frequency ranges, which are provided by way of example, may change from time to time or from region to region.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates a flow diagram for signaling between a UE and a base station of a network.
FIG. 2 illustrates a flow diagram for signaling between a UE and a base station of a network.
FIG. 3 illustrates a flowchart for determining whether a use case for optimizing UL synchronization for an SCC based on SCC measurement reporting may be used.
FIG. 4 illustrates a flowchart for determining whether a use case for optimizing UL synchronization for an SCC based on CSI reporting for the SCC may be used.
FIG. 5 illustrates a flowchart for determining whether a use case for optimizing UL synchronization for an SCC based on CSI reporting for the SCC may be used.
FIG. 6 illustrates a method of a UE that is in an RRC connected mode with a network through a PCC of a first TAG of the network, according to embodiments discussed herein.
FIG. 7 illustrates a method of a UE that is in an RRC connected mode with a network through a PCC of a first TAG of the network, according to embodiments discussed herein.
FIG. 8 illustrates a method of a UE that is in an RRC connected mode with a network through a PCC of a first TAG of the network, according to embodiments discussed herein.
FIG. 9 illustrates an example architecture of a wireless communication system, according to embodiments disclosed herein.
FIG. 10 illustrates a system for performing signaling between a wireless device and a network device, according to embodiments disclosed herein.

### DETAILED DESCRIPTION

Various embodiments are described with regard to a UE. However, reference to a UE is merely provided for illustrative purposes. The example embodiments may be utilized with any electronic component that may establish a connection to a network and is configured with the hardware, software, and/or firmware to exchange information and data with the network. Therefore, the UE as described herein is used to represent any appropriate electronic component.

Discussion herein relates to the UL synchronization of a UE for a component carrier (CC) of a cell with which the UE operates. As will be understood, a cell of a wireless communication system may be intended for operation with multiple UEs at once. The respective propagation timings for UL signaling from the various UEs to the reception point of the cell on the cell's CC will vary according to individual aspects of UE distance from the reception point, signal pathing, etc., as applicable at each of the UEs. It is beneficial for the network to synchronize the arrival time of the UL signals from these various UEs at the physical location of the reception point of the cell so as to minimize perceived interference of these UL signals at the cell. This is done by, for each of the UEs operating with the cell, configuring the UE with (individually) appropriate timing advance (TA) information that is used by the UE to determine a TA value for an amount of time the UE is to advance its UL signaling transmission. Through this mechanism, a UE's UL signaling arrival is synchronized with arrival of other UL signaling from other UE(s) from the perspective of the cell.

A TA value for a cell may be established at the UE via the use of a random access channel (RACH) procedure, as part of the RACH procedure, the UE sends a random access preamble on the CC of the cell. The cell replies with a random access response (RAR) that sets/adjusts the TA value for the cell that the UE is to use for UL transmissions on the CC of the cell. Note that this behavior may be the case under the use of either a 4-step RACH or a 2-step RACH procedure.

From the UE perspective, TA values for various CCs/cells may be understood on a timing advance group (TAG) basis. The UE may understand that one or more cells belong to a same TAG, and that a given TA value that is associated with that TAG is accordingly is to be used for UL transmissions on CCs of any cells of that TAG. The organization of TA values as corresponding to TAGs of cells in this manner enables the UE to be configured with respect to similarly-situated (e.g., co-located) cells without an explicit need for individual TA configuration for every such cell in every circumstance (e.g., by more simply changing the TA value for the TAG as a whole).

For some uplink (UL) carrier aggregation (ULCA) scenarios, where two or more CCs are used by one UE for UL communications, it is possible that the aggregated CCs are for cells belonging to different TAGs. As one example, this may be the case when considering ULCA across "mixed" frequency division duplex (FDD) + dynamic spectrum sharing (DSS) FDD cells corresponding to cases of FDD DSS and LTE/NR co-existence.

The UE may support functionalities for the use of the multiple TAGs in such circumstances. For example, multiple TAG functionality enables the UE to perform independent UL synchronization for each of a primary CC (PCC) of a primary cell (PCell) of a first TAG and each of one or more secondary CCs (SCCs) of secondary cells (SCells) of other TAG(s) as used in UL according to the ULCA operation.

The UE may make use of a capability information element (IE) to indicate to the network that is supports multiple TAG use. In some wireless communication systems, a *supportedNumberTAG n2,n3,n4* (etc.) IE may be used for this purpose.

Corresponding to such multiple TAG cases for ULCA, it may be that, after a UE enters a CONNECTED radio resource control (RRC) state with the network on the PCC of a PCell and after initial activation/configuration of an SCC of an SCell, the UE attempts to establish UL synchronization for the SCC via a physical downlink control channel (PDCCH)-ordered contention free random access (CFRA) procedure on the SCC. In some such cases, a physical random access channel (PRACH) (e.g., a RACH preamble, msgl/msgA) is sent by the UE to the SCell on the SCC, while the RAR (e.g., msg2 or msgB) that includes any TA information for the SCell is sent to the UE on the PCC by the PCell.

Note that in some such cases, messages corresponding to 4-step RACH procedures (msgl, msg2) may be used (as just described). In such cases, contention resolution messages (msg3/msg4) corresponding to the 4-step RACH procedure may not be necessary (in that the RACH procedure may be considered a CFRA procedure corresponding to the use of the PDCCH order).

Note that the procedure just described assumes that the UE is in a sufficient channel condition with the SCC in order to be able to independently synchronize for the SCC with a base station of the network for the corresponding SCell. In other words, for SCC synchronization to occur as described, the channel conditions of the SCC should be sufficient such that the UE can both decode a PDCCH order received from the SCell on the SCC and send a sufficient RACH preamble to the SCell on the SCC.

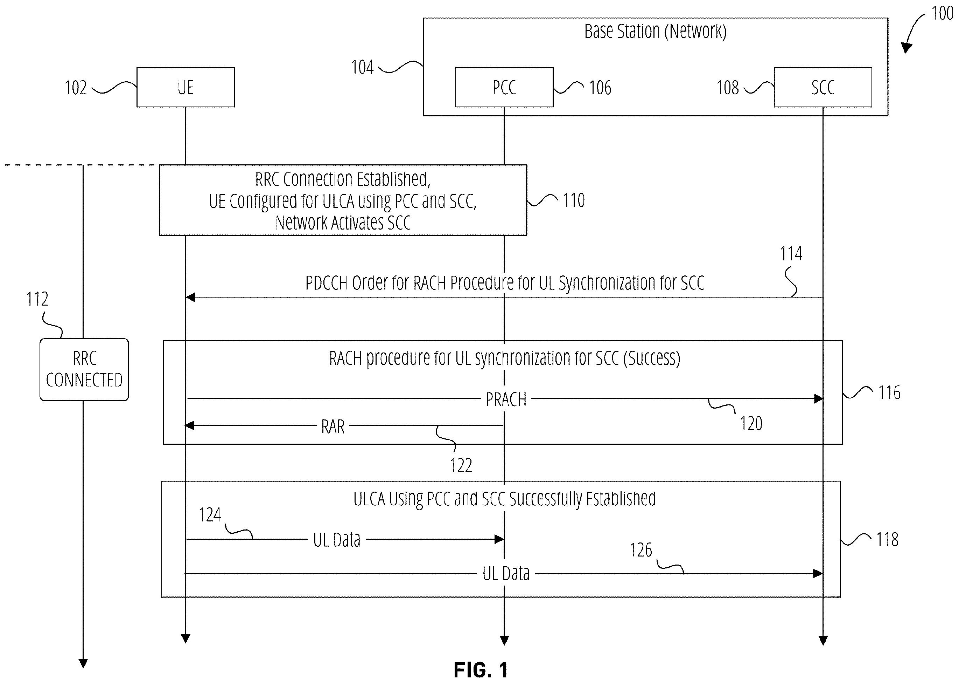

FIG. 1 illustrates a flow diagram 100 for signaling between a UE 102 and a base station 104 of a network. From the perspective of the UE 102, the base station 104 operates a PCC 106 of a PCell of the UE and an SCC 108 of an SCell of the UE, as illustrated. From the perspective of the UE 102, the PCC 106 and the SCC 108 belong to different TAGs.

Preliminarily, the base station 104 establishes 110 an RRC connection 112 with the UE 102 through the PCC 106. The base station 104 communicates with the UE 102 over the PCC 106 to configure the UE 102 to use ULCA with both the PCC 106 and the SCC 108. Corresponding to this configuration, the base station 104 activates the SCC 108 for use at/by the UE 102.

Then, because the PCC 106 and the SCC 108 are in different TAGs, the base station 104 sends the UE 102 a PDCCH order 114 to perform a RACH procedure on the SCC 108 for purposes of independent UL synchronization for the SCC 108.

In response to the PDCCH order 114, the UE 102 triggers a RACH procedure 116 for UL synchronization on the SCC 108. As shown, as part of the RACH procedure 116, the UE 102 sends a PRACH 120 (e.g., a random access preamble) to the base station 104 on the SCC 108. Based on the timing of the PRACH 120, the base station 104 determines TA information for a TA value for the UE 102 for use for UL communication on the SCC 108. This TA information is provided from the base station 104 to the UE 102 in a RAR 122 sent on the base station 104. The UE 102 uses this TA information to determine a TA value that synchronizes its UL transmissions for the SCC 108.

Note that the PRACH 120 and the RAR 122 may be messages corresponding to either of a 2-step RACH procedure or a 4-step RACH procedure. In the case of messages corresponding to the 4-step RACH procedure, contention resolution messages (msg3/msg4) may not be necessary within the RACH procedure 116 (in that the RACH procedure 116 is a CFRA procedure in this case).

In the case that the RACH procedure 116 is successful, the UE is now synchronized for UL transmissions on the SCC 108 and thus the case for ULCA 118 using both the PCC 106 and the SCC 108 is successfully established at the UE 102. Accordingly, the UE 102 is capable of (simultaneously) sending first UL data 124 to the base station 104 on the PCC 106 and second UL data 126 to the base station 104 on the SCC 108.

FIG. 1 corresponds to a case where the UE is in sufficient coverage for a successful RACH procedure 116. However, various conditions where this assumption may not hold are possible. For example, if the UE is in certain mid-cell conditions (for one example, around -115 decibel milliwatts (dBm)) for the aggregated carriers, the signal strength may be high enough for the network to activate DL aggregated carriers through a PCell and an SCell. However, it may be that a corresponding UL signal to interference and noise ratio (SINR) is nevertheless not high enough for UL transmissions on the SCC of the SCell by the UE to be successfully decoded at the base station. Accordingly, in such circumstances, it may be the case that the UE successfully decodes a PDCCH order in DL sent on the SCC to trigger a RACH procedure for UL synchronization for the SCC, but that the corresponding PRACH of the triggered RACH procedure that is sent by the UE on the SCC does not successfully reach the network.

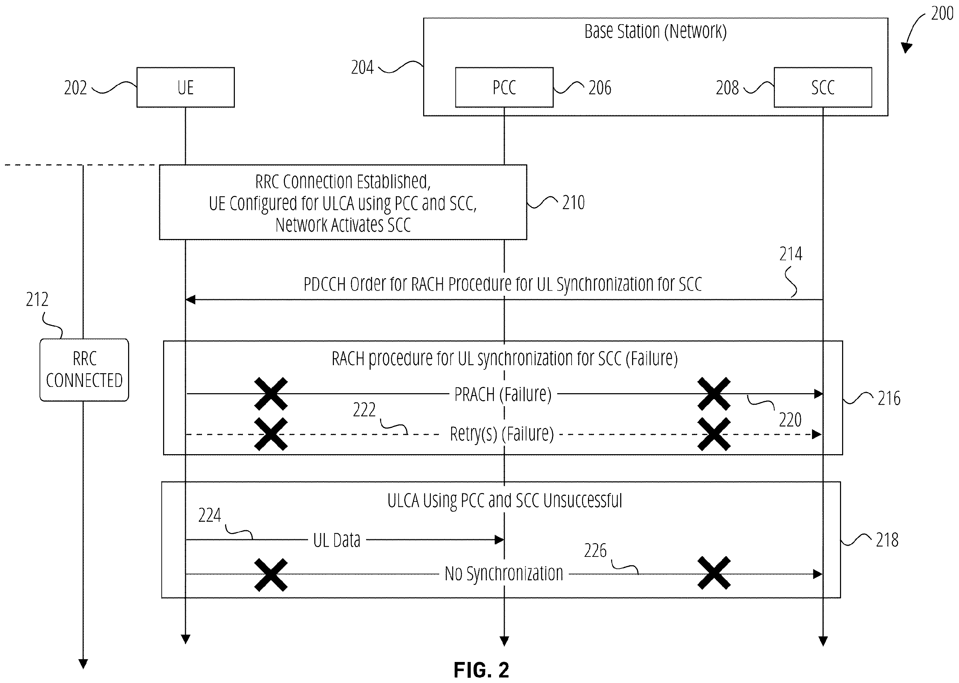

FIG. 2 illustrates a flow diagram 200 for signaling between a UE 202 and a base station 204 of a network. From the perspective of the UE 202, the base station 204 operates a PCC 206 of a PCell of the UE and an SCC 208 of an SCell of the UE, as illustrated. From the perspective of the UE 202, the PCC 206 and the SCC 208 belong to different TAGs.

Preliminarily, the base station 204 establishes 210 an RRC connection 212 with the UE 202 through the PCC 206. The base station 204 communicates with the UE 202 over the PCC 206 to configure the UE 202 to use ULCA with both the PCC 206 and the SCC 208. Corresponding to this configuration, the base station 204 activates the SCC 208 for use at/by the UE 202.

Then, because the PCC 106 and the SCC 108 are in different TAGs, the base station 204 sends the UE 202 a PDCCH order 214 to perform a RACH procedure on the SCC 208 for purposes of independent UL synchronization for the SCC 208. Channel conditions for the UE 202 on the SCC 208 are sufficient for DL signaling (such as the PDCCH order 214) on the SCC 208 to be received at the UE 202.

In response to the PDCCH order 214, the UE 202 triggers a RACH procedure 216 for UL synchronization on the SCC 208. As shown, as part of the RACH procedure 216, the UE 202 sends a PRACH 220 (e.g., a random access preamble) to the base station 204 on the SCC 208. However, the channel conditions for the UE 202 on the SCC 208 are not sufficient for UL signaling (such as the PRACH 220) from the UE 202 on the SCC 208 to be successfully received at the base station 104. Accordingly, the PRACH 220 is not successfully received at the base station 104. Note that because the PRACH 220 does not reach the base station 104, no RAR to the PRACH 220 is sent by the base station 104.

Due to a failure to receive any RAR to the PRACH 220, the UE is aware that another PRACH should be attempted. Accordingly, the UE 202 may retry 222 the PRACH 220, up to a PRACH attempt limit number of times. FIG. 2 illustrates the case where none of the initial PRACH 220 nor any retry 222 is successfully received at the network (and thus no RAR is sent to the UE 202).

Because the RACH procedure 216 was not successful, the UE is not synchronized for UL transmissions on the SCC 208, and thus the case for ULCA 218 using both the PCC 206 and the SCC 208 is not successfully established at the UE 202. Accordingly, while the UE 202 is capable of sending first UL data 224 to the base station 204 on the PCC 206, the UE is not capable of sending second UL data 226 to the base station 204 on the SCC 208, due to the lack of UL synchronization for the SCC 208, as illustrated. Accordingly, the ULCA 218 using the PCC 206 and the SCC 208 fails.

A UE may be configured to perform only a limited amount of PRACH attempts (retry only a limited number of RACH preambles) corresponding to a triggered RACH procedure to which no RAR is received from the network. For example, in some cases, a limit of 10 RACH preambles may be sent corresponding to a triggered RACH procedure. Once the limit is reached, further PRACH attempts corresponding to the RACH procedure are ceased. The duration of time corresponding to this limited number of PRACH attempts may be on the order of milliseconds (ms) (e.g., in some cases, a limit of up to 10 PRACH attempts may be tried over the course of 200 ms).

On the other hand, a duration of time corresponding to an improvement in channel conditions at the UE may be instead on the order of seconds, minutes, or longer. For example, the time taken for the user to move from 1) a mid-cell condition where a PDCCH order can be successfully received at the UE but UL SINR aspects are not sufficient for a RACH preamble by the UE to be received at the network to 2) a nearer cell condition where UL SINR aspects are improved such that the RACH preamble by the UE would be successful may be on the order of seconds or minutes.

Accordingly, it has been recognized that, in various instances where an SCC is of a different TAG than a PCC (and thus separate UL synchronization for the SCC is needed), and after receiving a PDCCH order for a RACH procedure to perform UL synchronization for the SCC, by the time the user comes into the channel with a high enough UL SINR for a PRACH on the SCC for purposes of the UL synchronization to be decoded successfully by the network, the UE has already reached the PRACH attempt limit for the RACH procedure (and thus is no longer trying to establish UL synchronization for SCC through the RACH procedure). Accordingly, the UE does not ultimately gain UL synchronization for the SCC. In such cases, the UE cannot use UL transmissions on the SCC according to its ULCA configuration (despite the fact that the UE now enjoys a sufficient channel quality to meet UL synchronization requirements).

Further, it may be that the UE is configured in such a way that it does not consider any new opportunity to trigger UL synchronization for the SCC until the UE first falls to an RRC ILDE state or a no data state and then recovers back to an RRC CONNECTED state through a PCC of a PCell. Until that time, the user experience (e.g., UL throughput) is limited to non-SCC-using bounds.

Embodiments herein describe mechanisms that may be employed at a UE to cause the UE to re-attempt a previously-failed UL synchronization on an SCC without first falling out of an RRC CONNECTED state. Through the use of such mechanisms, the time period for which a user experience (e.g., UL throughput) at a UE is limited to non-SCC-using bounds may be relatively reduced.

It will be understood that a network may (e.g., by default) configure a UE for event-based measurement reporting based on neighbor cell and/or serving cell measurements. In some such cases, the device may be configured to report, for example, a reference signal received power (RSRP) of a CC of a cell once that RSRP rises above a certain threshold.

It may be that the threshold being so used also represents a RSRP value at which it may be expected that a corresponding UL SINR at the reception point of the cell allows for an UL transmission from the UE to the network on the CC of the cell be decoded successfully.

A UE may be configured to preliminarily identify whether a RACH procedure for UL synchronization for an SCC has failed (and thus that the UE does not have UL synchronization with the SCC). The UE may be further configured to identify that it has been triggered to send an RSRP report for the SCC because an RSRP of the SCC has risen above the applicable measurement reporting threshold. In such cases, the UE may use the triggering of the RSRP reporting for the SCC as a reason for the UE to (also) trigger a new RACH procedure on the SCC for purposes of UL synchronization for the SCC.

As discussed above, due to the RSRP of the SCC meeting at least the reporting threshold, it is now expected that this new RACH procedure may be successful. If so, the UE gains UL synchronization with the SCC and can use the SCC per a configured ULCA configuration. Accordingly, a better user experience (e.g., better UL throughput) may be achieved through full use of ULCA corresponding to the time that the UE gains good channel conditions on the SCC, without the UE having to first cycle its RRC connection with the network (e.g., at some later time).

In cases where the new RACH procedure in any event fails to establish UL synchronization for the UE for the SCC, the procedure may be repeated the next time a measurement reporting event for SCC is triggered.

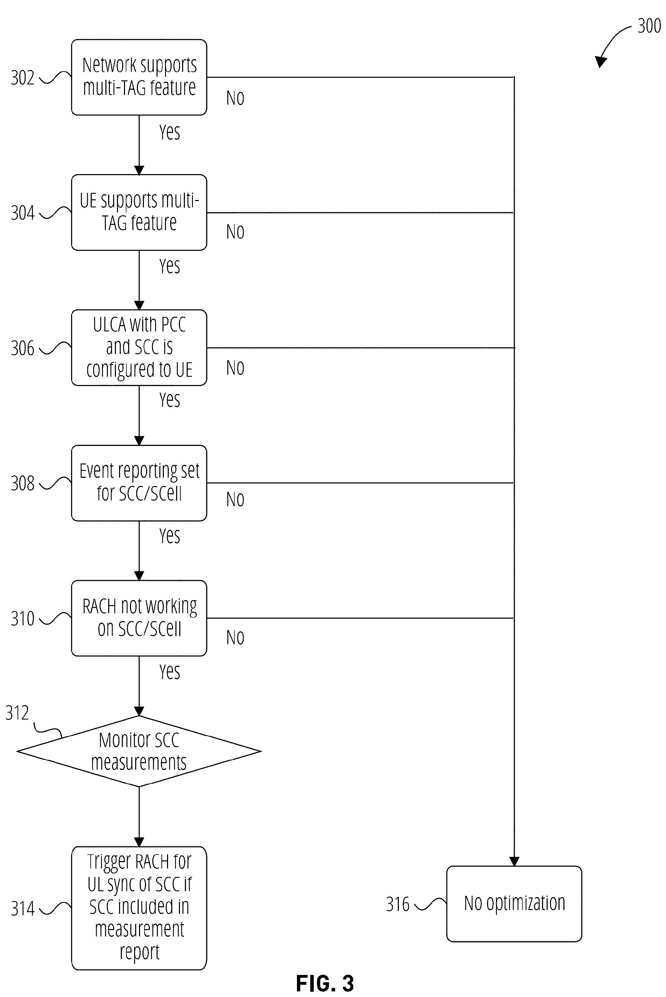

FIG. 3 illustrates a flowchart 300 for determining whether a use case for optimizing UL synchronization for an SCC based on SCC measurement reporting may be used. First, it is determined 302 whether the network supports the use of the multiple TAG feature. If not, the flowchart 300 ends at the non-use of the optimization 316.

Then, it is determined 304 whether the UE supports the use of the multiple TAG feature (e.g., the UE supports the reporting of *supportedNumberTAG n2,n3,n4* (etc.)). If not, the flowchart 300 ends at the non-use of the optimization 316.

Then, it is determined 306 whether ULCA with both of a PCC and an SCC has been configured to the UE. If not, the flowchart 300 ends at the non-use of the optimization 316.

Then, it is determined 308 whether measurement reporting (e.g., event-based measurement reporting) is set to occur for the SCC of the SCell. If not, the flowchart 300 ends at the non-use of the optimization 316.

Then, it is determined 310 whether there are circumstances corresponding to a case of RACH failure on the SCC. If not, the flowchart 300 ends at the non-use of the optimization 316.

The flowchart 300 then proceeds to the monitoring 312 of measurements on the SCC for purposes of measurement reporting (e.g., when an RSRP of the SCC rises above a given threshold).

Then, as shown, a RACH for UL synchronization of the UE for the SCC may be triggered 314 when a measurement report corresponding to the monitoring 312 reports on the SCC (e.g., reports an RSRP of the SCC).

It will be understood that a UE may periodically report on a channel condition of an SCC in terms of channel state information (CSI). The CSI report may inform the network about one or more aspects of the channel for the SCC as perceived by the UE. CSI reporting corresponding to the state of the SCC of the SCell may be sent from the UE to the network on the PCC of the PCell.

A CSI report may include one or more CSI components. A first CSI component may be a precoder matrix indicator (PMI) that indicates a UE selection for a precoder. A second CSI component may be a channel quality index (CQI) that indicates a UE selection for coding rate and/or modulation scheme. A third CSI component may be a rank indicator (RI) for a UE selection for transmission rank.

It may be that a case of one or more aspects of the channel of a cell as reported by their corresponding CSI components may or may not correspond to a quality level for the cell at which it may be expected that a corresponding UL SINR at the reception point of the cell allows for an UL transmission from the UE to the network on the CC of the cell be decoded successfully.

Discussion herein relates to the comparison of a CSI component to a "threshold" for the CSI component. In such cases, it may be understood that a threshold for a particular type of CSI component may be of a type that is cognizable with respect to a typing for that CSI component.

For example, in the case that the CSI component is a PMI, a corresponding threshold may be a PMI threshold. The PMI threshold may be considered met when, for example, the PMI indicates a precoder that is understood to correspond to a quality level for the cell at which it may be expected that a corresponding UL SINR at the reception point of the cell allows for an UL transmission from the UE to the network on the CC of the cell be decoded successfully. This may correspond to, for example, the indication by the UE of relatively more complex precoders using the PMI.

As another example, in the case that the CSI component is a CQI, a corresponding threshold may be a CQI threshold. The CQI threshold may be considered met when, for example, the CQI indicates a coding rate and/or modulation scheme that is understood to correspond to a quality level for the cell at which it may be expected that a corresponding UL SINR at the reception point of the cell allows for an UL transmission from the UE to the network on the CC of the cell be decoded successfully. This may correspond to, for example, the indication by the UE of relatively higher coding rates and/or modulation schemes using the CQI.

As another example, in the case that the CSI component is an RI, a corresponding threshold may be an RI threshold. The RI threshold may be considered met when, for example, the RI indicates a rank that is understood to correspond to a quality level for the cell at which it may be expected that a corresponding UL SINR at the reception point of the cell allows for an UL transmission from the UE to the network on the CC of the cell be decoded successfully. This may correspond to, for example, the indication by the UE of relatively higher ranks using the RI.

A UE may be configured to preliminarily identify whether a RACH procedure for UL synchronization for an SCC has failed (and thus that the UE does not have UL synchronization with the SCC). The UE may be further configured to identify that a CSI report reports one or more CSI components for an SCC that meets the applicable threshold(s). In such cases, the UE may use the identification of the one or more CSI components for the SCC that meet applicable threshold(s) in the CSI report for the network as a reason for the UE to (also) trigger a new RACH procedure on the SCC for purposes of UL synchronization for the SCC.

As discussed above, due to the one or more CSI components meeting their applicable threshold(s), it is now expected that this new RACH procedure may be successful. If so, the UE gains UL synchronization with the SCC and can use the SCC per a configured ULCA configuration. Accordingly, a better user experience (e.g., better UL throughput) may be achieved through full use of ULCA corresponding to the time that the UE gains good channel conditions on the SCC, without the UE having to first cycle its RRC connection with the network (e.g., at some later time).

In cases where the new RACH procedure in any event fails to establish UL synchronization for the UE for the SCC, the procedure may be repeated the next time a CSI component being reported for the SCC meets a corresponding threshold.

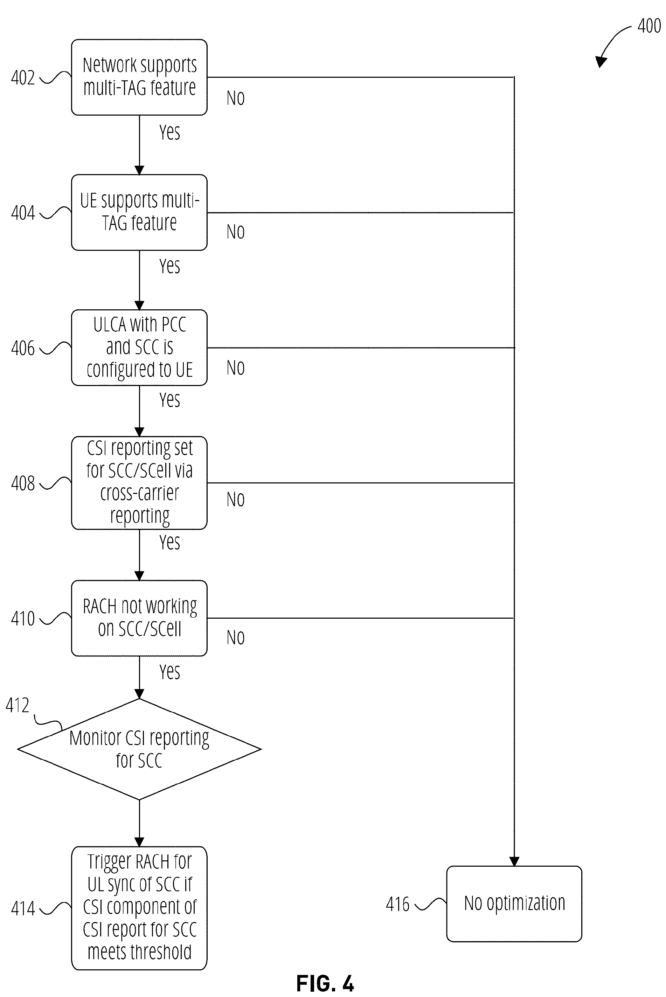

FIG. 4 illustrates a flowchart 400 for determining whether a use case for optimizing UL synchronization for an SCC based on CSI reporting for the SCC may be used. First, it is determined 402 whether the network supports the use of the multiple TAG feature. If not, the flowchart 400 ends at the non-use of the optimization 416.

Then, it is determined 404 whether the UE supports the use of the multiple TAG feature (e.g., the UE supports the reporting of *supportedNumberTAG n2,n3,n4* (etc.)). If not, the flowchart 400 ends at the non-use of the optimization 416.

Then, it is determined 406 whether ULCA with both of a PCC and an SCC has been configured to the UE. If not, the flowchart 400 ends at the non-use of the optimization 416.

Then, it is determined 408 whether CSI reporting (e.g., via cross-carrier CSI reporting) is configured for the SCC of the SCell. If not, the flowchart 400 ends at the non-use of the optimization 416.

Then, it is determined 410 whether there are circumstances corresponding to a case of RACH failure on the SCC. If not, the flowchart 400 ends at the non-use of the optimization 416.

The flowchart 400 then proceeds to the monitoring 412 of CSI reporting for the SCC (e.g., to identify if/when a CSI component of a CSI report for the SCC meets an applicable threshold).

Then, as shown, a RACH for UL synchronization of the UE for the SCC may be triggered 414 when a CSI report for the SCC includes one or more CSI component(s) that meet applicable threshold(s) (e.g., a PMI meets a PMI threshold, a CQI meets a CQI threshold, and/or an RI meets an RI threshold).

In some cases, a UE may be capable of monitoring its DL throughput over time. Corresponding to such cases, the UE may accordingly be capable of identifying whether DL throughput through an SCC has improved corresponding to a given time period. For example, a UE may be capable of determining a DL throughput percentage improvement of the DL throughput (e.g., in terms of an X% improvement) over/corresponding to a time period. The UE may be capable of comparing the DL throughput percentage improvement to a DL throughput percentage improvement threshold.

A UE may be configured to preliminarily identify whether a RACH procedure for UL synchronization for an SCC has failed (and thus that the UE does not have UL synchronization with the SCC). The UE may be further configured to identify that the DL throughput through the SCC has improved corresponding to a time period. In some such cases, the UE identifies that the DL throughput through the SCC has improved by determining, corresponding to the time period, a DL throughput percentage improvement and further verifying that the DL throughput improvement percentage meets a DL throughput percentage improvement threshold. In some embodiments, the time period used for these determinations is a time period that begins at a time of the failed RACH procedure.

The UE may use the recognition of DL throughput improvement as a reason for the UE to (also) trigger a new RACH procedure on the SCC for purposes of UL synchronization for the SCC (e.g., in view of an assumption that DL channel improvements for a channel likely correlate to UL channel improvements for that channel as well). Due to the identified improvement on DL throughput over the SCC, it is expected that the new RACH procedure on the SCC may be successful. If so, the UE gains UL synchronization with the SCC and can use the SCC per a configured ULCA configuration. Accordingly, a better user experience (e.g., better UL throughput) may be achieved through full use of ULCA corresponding to the time that the UE gains good channel conditions on the SCC, without the UE having to first cycle its RRC connection with the network (e.g., at some later time).

In cases where the new RACH procedure in any event fails to establish UL synchronization for the UE for the SCC, the procedure may be repeated the next time a DL throughput improvement as described is recognized.

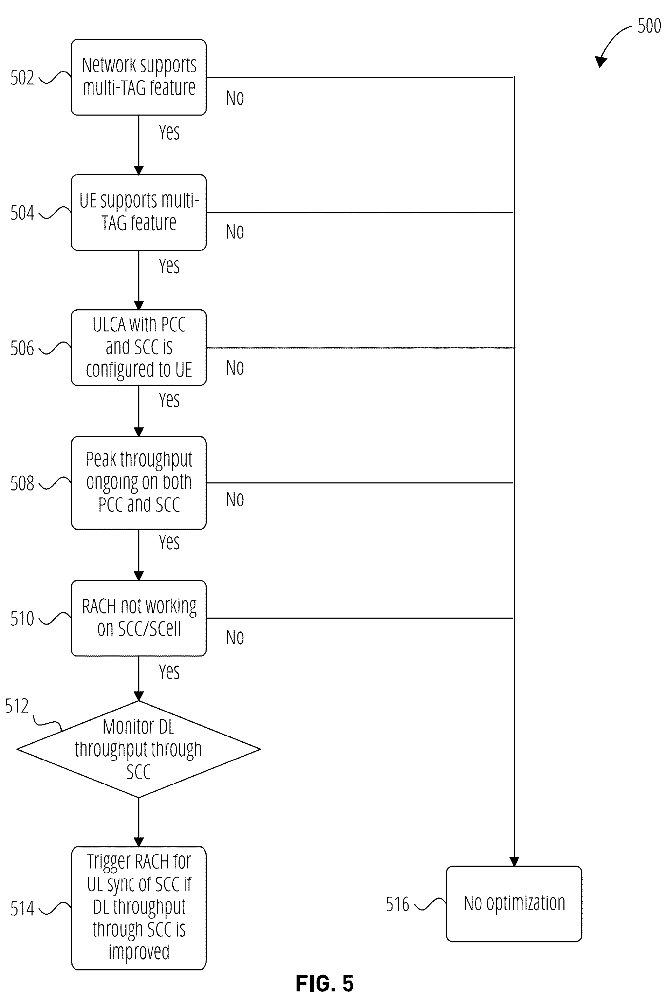

FIG. 5 illustrates a flowchart 500 for determining whether a use case for optimizing UL synchronization for an SCC based on CSI reporting for the SCC may be used. First, it is determined 502 whether the network supports the use of the multiple TAG feature. If not, the flowchart 500 ends at the non-use of the optimization 516.

Then, it is determined 504 whether the UE supports the use of the multiple TAG feature (e.g., the UE supports the reporting of *supportedNumberTAG n2,n3,n4* (etc.)). If not, the flowchart 500 ends at the non-use of the optimization 516.

Then, it is determined 506 whether ULCA with both of a PCC and an SCC has been configured to the UE. If not, the flowchart 500 ends at the non-use of the optimization 516.

Then, it is determined 508 whether the UE can track peak DL throughput levels for the SCC (and, in some cases the PCC). If not, the flowchart 500 ends at the non-use of the optimization 516.

Then, it is determined 510 whether there are circumstances corresponding to a case of RACH failure on the SCC. If not, the flowchart 500 ends at the non-use of the optimization 516.

The flowchart 500 then proceeds to the monitoring 512 of DL throughput on the SCC on for purposes of identifying an improvement of the DL throughput on the SCC corresponding to an applicable time period.

Then, as shown, a RACH for UL synchronization of the UE for the SCC may be triggered 514 when an improvement of the DL throughput on the SCC corresponding to an applicable time period is so identified.

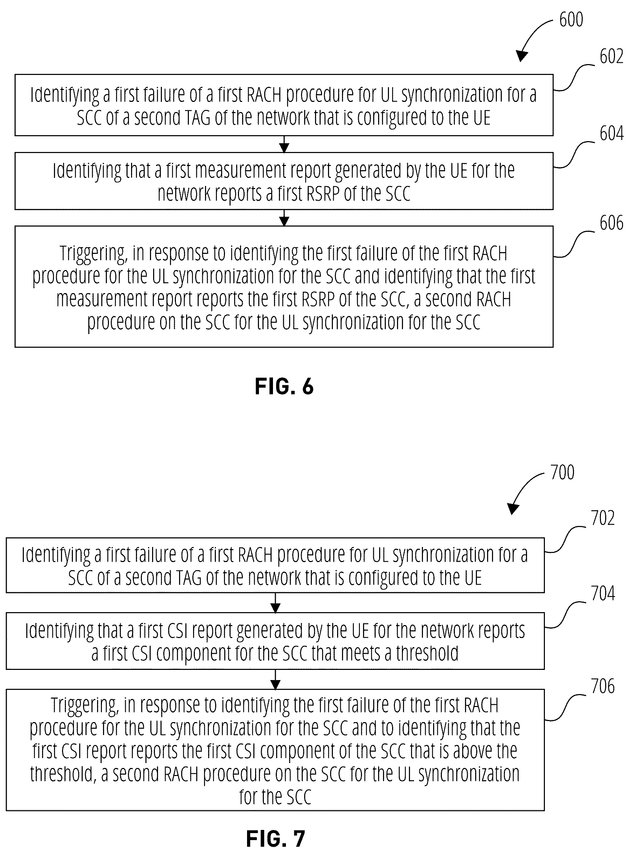

FIG. 6 illustrates a method 600 of a UE that is in an RRC connected mode with a network through a PCC of a first TAG of the network, according to embodiments discussed herein. The method 600 includes identifying 602 a first failure of a first RACH procedure for UL synchronization for a SCC of a second TAG of the network that is configured to the UE. The method 600 further includes identifying 604 that a first measurement report generated by the UE for the network reports a first RSRP of the SCC. The method 600 further includes triggering 606, in response to identifying the first failure of the first RACH procedure for the UL synchronization for the SCC and identifying that the first measurement report reports the first RSRP of the SCC, a second RACH procedure on the SCC for the UL synchronization for the SCC.

In some embodiments, the method 600 further includes identifying a second failure of the second RACH procedure for the UL synchronization for the SCC; identifying that a second measurement report generated by the UE for the network reports a second RSRP of the SCC; and triggering, in response to identifying the second failure of the second RACH procedure for the UL synchronization for the SCC and identifying that the second measurement report reports the second RSRP of the SCC, a third RACH procedure on the SCC for the UL synchronization for the SCC.

FIG. 7 illustrates a method 700 of a UE that is in an RRC connected mode with a network through a PCC of a first TAG of the network, according to embodiments discussed herein. The method 700 includes identifying 702 a first failure of a first RACH procedure for UL synchronization for a SCC of a second TAG of the network that is configured to the UE. The method 700 further includes identifying 704 that a first CSI report generated by the UE for the network reports a first CSI component for the SCC that meets a threshold. The method 700 further includes triggering 706, in response to identifying the first failure of the first RACH procedure for the UL synchronization for the SCC and to identifying that the first CSI report reports the first CSI component of the SCC that is above the threshold, a second RACH procedure on the SCC for the UL synchronization for the SCC.

In some embodiments of the method 700, the first CSI component comprises a channel quality index (CQI), the threshold comprises a CQI threshold, and the second RACH procedure is triggered in response to determining that the CQI meets the CQI threshold.

In some embodiments of the method 700, the first CSI component comprises a precoder matrix indicator (PMI), the threshold comprises a PMI threshold, and the second RACH procedure is triggered in response to determining that the PMI meets the PMI threshold.

In some embodiments of the method 700, the first CSI component comprises an RI, the threshold comprises an RI threshold, and the second RACH procedure is triggered in response to determining that the RI meets the RI threshold.

In some embodiments, the method 700 further includes identifying a second failure of the second RACH procedure for the UL synchronization for the SCC; identifying that a second CSI report generated by the UE for the network reports a second CSI component for the SCC that meets the threshold; and triggering, in response to identifying the second failure of the second RACH procedure for the UL synchronization for the SCC and to identifying that the second CSI report reports the second CSI component for the SCC that is above the threshold, a third RACH procedure on the SCC for the UL synchronization for the SCC.

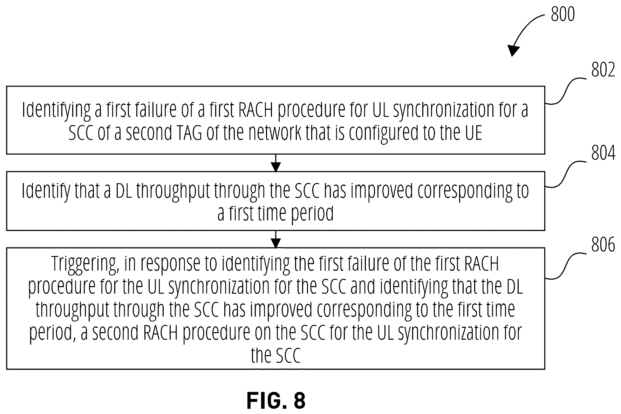

FIG. 8 illustrates a method 800 of a UE that is in an RRC connected mode with a network through a PCC of a first TAG of the network, according to embodiments discussed herein. The method 800 includes identifying 802 a first failure of a first RACH procedure for UL synchronization for a SCC of a second TAG of the network that is configured to the UE. The method 800 further includes identifying 804 that a DL throughput through the SCC has improved corresponding to a first time period. The method 800 further includes triggering 806, in response to identifying the first failure of the first RACH procedure for the UL synchronization for the SCC and identifying that the DL throughput through the SCC has improved corresponding to the first time period, a second RACH procedure on the SCC for the UL synchronization for the SCC.

In some embodiments of the method 800, identifying that the DL throughput through the SCC has improved corresponding to the first time period comprises: determining a DL throughput percentage improvement of the DL throughput through the SCC corresponding to the first time period; and determining that the DL throughput percentage improvement meets a DL throughput percentage improvement threshold.

In some embodiments of the method 800, the first time period begins at a time of the first RACH procedure.

In some embodiments, the method 800 further includes identifying a second failure of the second RACH procedure for the UL synchronization for the SCC; identifying that the DL throughput through the SCC has improved corresponding to a second time period; and triggering, in response to identifying the second failure of the second RACH procedure for the UL synchronization for the SCC and identifying that the DL throughput through the SCC has improved corresponding to the second time period, a third RACH procedure on the SCC for the UL synchronization for the SCC.

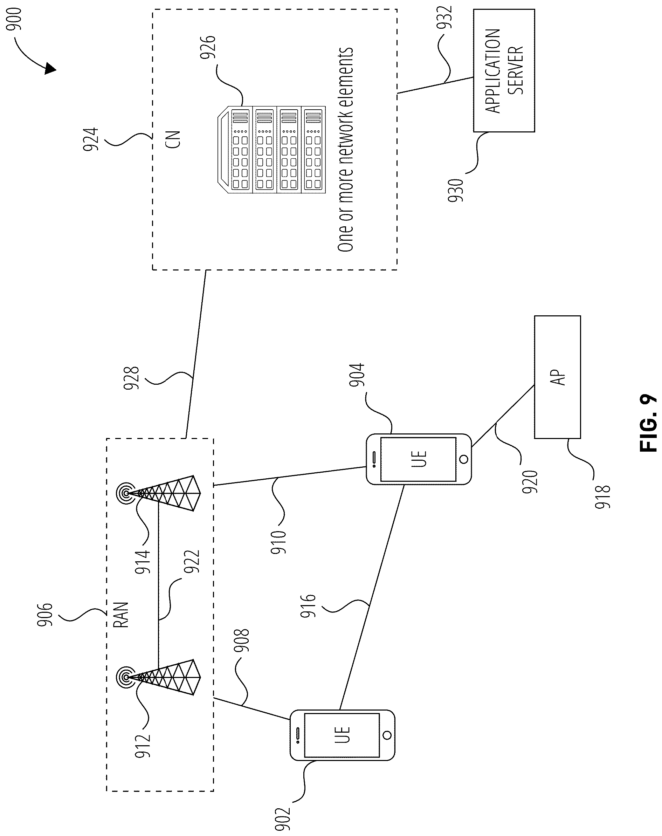

FIG. 9 illustrates an example architecture of a wireless communication system 900, according to embodiments disclosed herein. The following description is provided for an example wireless communication system 900 that operates in conjunction with the LTE system standards and/or 5G or NR system standards as provided by 3GPP technical specifications.

As shown by FIG. 9, the wireless communication system 900 includes UE 902 and UE 904 (although any number of UEs may be used). In this example, the UE 902 and the UE 904 are illustrated as smartphones (e.g., handheld touchscreen mobile computing devices connectable to one or more cellular networks), but may also comprise any mobile or non-mobile computing device configured for wireless communication.

The UE 902 and UE 904 may be configured to communicatively couple with a RAN 906. In embodiments, the RAN 906 may be NG-RAN, E-UTRAN, etc. The UE 902 and UE 904 utilize connections (or channels) (shown as connection 908 and connection 910, respectively) with the RAN 906, each of which comprises a physical communications interface. The RAN 906 can include one or more base stations (such as base station 912 and base station 914) that enable the connection 908 and connection 910.

In this example, the connection 908 and connection 910 are air interfaces to enable such communicative coupling, and may be consistent with RAT(s) used by the RAN 906, such as, for example, an LTE and/or NR.

In some embodiments, the UE 902 and UE 904 may also directly exchange communication data via a sidelink interface 916. The UE 904 is shown to be configured to access an access point (shown as AP 918) via connection 920. By way of example, the connection 920 can comprise a local wireless connection, such as a connection consistent with any IEEE 802.11 protocol, wherein the AP 918 may comprise a Wi-Fi^{®} router. In this example, the AP 918 may be connected to another network (for example, the Internet) without going through a CN 924.

In embodiments, the UE 902 and UE 904 can be configured to communicate using orthogonal frequency division multiplexing (OFDM) communication signals with each other or with the base station 912 and/or the base station 914 over a multicarrier communication channel in accordance with various communication techniques, such as, but not limited to, an orthogonal frequency division multiple access (OFDMA) communication technique (e.g., for downlink communications) or a single carrier frequency division multiple access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, all or parts of the base station 912 or base station 914 may be implemented as one or more software entities running on server computers as part of a virtual network. In addition, or in other embodiments, the base station 912 or base station 914 may be configured to communicate with one another via interface 922. In embodiments where the wireless communication system 900 is an LTE system (e.g., when the CN 924 is an EPC), the interface 922 may be an X2 interface. The X2 interface may be defined between two or more base stations (e.g., two or more eNBs and the like) that connect to an EPC, and/or between two eNBs connecting to the EPC. In embodiments where the wireless communication system 900 is an NR system (e.g., when CN 924 is a 5GC), the interface 922 may be an Xn interface. The Xn interface is defined between two or more base stations (e.g., two or more gNBs and the like) that connect to 5GC, between a base station 912 (e.g., a gNB) connecting to 5GC and an eNB, and/or between two eNBs connecting to 5GC (e.g., CN 924).

The RAN 906 is shown to be communicatively coupled to the CN 924. The CN 924 may comprise one or more network elements 926, which are configured to offer various data and telecommunications services to customers/subscribers (e.g., users of UE 902 and UE 904) who are connected to the CN 924 via the RAN 906. The components of the CN 924 may be implemented in one physical device or separate physical devices including components to read and execute instructions from a machine-readable or computer-readable medium (e.g., a non-transitory machine-readable storage medium).

In embodiments, the CN 924 may be an EPC, and the RAN 906 may be connected with the CN 924 via an S1 interface 928. In embodiments, the S1 interface 928 may be split into two parts, an S1 user plane (S1-U) interface, which carries traffic data between the base station 912 or base station 914 and a serving gateway (S-GW), and the S1-MME interface, which is a signaling interface between the base station 912 or base station 914 and mobility management entities (MMEs).

In embodiments, the CN 924 may be a 5GC, and the RAN 906 may be connected with the CN 924 via an NG interface 928. In embodiments, the NG interface 928 may be split into two parts, an NG user plane (NG-U) interface, which carries traffic data between the base station 912 or base station 914 and a user plane function (UPF), and the S1 control plane (NG-C) interface, which is a signaling interface between the base station 912 or base station 914 and access and mobility management functions (AMFs).

Generally, an application server 930 may be an element offering applications that use internet protocol (IP) bearer resources with the CN 924 (e.g., packet switched data services). The application server 930 can also be configured to support one or more communication services (e.g., VoIP sessions, group communication sessions, etc.) for the UE 902 and UE 904 via the CN 924. The application server 930 may communicate with the CN 924 through an IP communications interface 932.

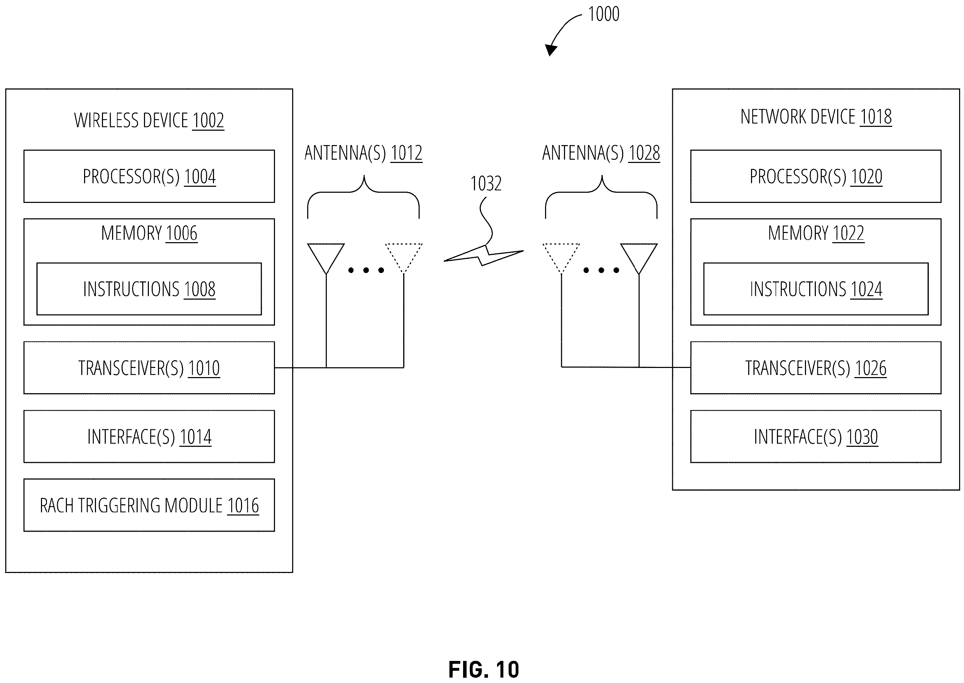

FIG. 10 illustrates a system 1000 for performing signaling 1032 between a wireless device 1002 and a network device 1018, according to embodiments disclosed herein. The system 1000 may be a portion of a wireless communications system as herein described. The wireless device 1002 may be, for example, a UE of a wireless communication system. The network device 1018 may be, for example, a base station (e.g., an eNB or a gNB) of a wireless communication system.

The wireless device 1002 may include one or more processor(s) 1004. The processor(s) 1004 may execute instructions such that various operations of the wireless device 1002 are performed, as described herein. The processor(s) 1004 may include one or more baseband processors implemented using, for example, a central processing unit (CPU), a digital signal processor (DSP), an application specific integrated circuit (ASIC), a controller, a field programmable gate array (FPGA) device, another hardware device, a firmware device, or any combination thereof configured to perform the operations described herein.

The wireless device 1002 may include a memory 1006. The memory 1006 may be a non-transitory computer-readable storage medium that stores instructions 1008 (which may include, for example, the instructions being executed by the processor(s) 1004). The instructions 1008 may also be referred to as program code or a computer program. The memory 1006 may also store data used by, and results computed by, the processor(s) 1004.

The wireless device 1002 may include one or more transceiver(s) 1010 that may include radio frequency (RF) transmitter circuitry and/or receiver circuitry that use the antenna(s) 1012 of the wireless device 1002 to facilitate signaling (e.g., the signaling 1032) to and/or from the wireless device 1002 with other devices (e.g., the network device 1018) according to corresponding RATs.

The wireless device 1002 may include one or more antenna(s) 1012 (e.g., one, two, four, or more). For embodiments with multiple antenna(s) 1012, the wireless device 1002 may leverage the spatial diversity of such multiple antenna(s) 1012 to send and/or receive multiple different data streams on the same time and frequency resources. This behavior may be referred to as, for example, multiple input multiple output (MIMO) behavior (referring to the multiple antennas used at each of a transmitting device and a receiving device that enable this aspect). MIMO transmissions by the wireless device 1002 may be accomplished according to precoding (or digital beamforming) that is applied at the wireless device 1002 that multiplexes the data streams across the antenna(s) 1012 according to known or assumed channel characteristics such that each data stream is received with an appropriate signal strength relative to other streams and at a desired location in the spatial domain (e.g., the location of a receiver associated with that data stream). Certain embodiments may use single user MIMO (SU-MIMO) methods (where the data streams are all directed to a single receiver) and/or multi user MIMO (MU-MIMO) methods (where individual data streams may be directed to individual (different) receivers in different locations in the spatial domain).

In certain embodiments having multiple antennas, the wireless device 1002 may implement analog beamforming techniques, whereby phases of the signals sent by the antenna(s) 1012 are relatively adjusted such that the (joint) transmission of the antenna(s) 1012 can be directed (this is sometimes referred to as beam steering).

The wireless device 1002 may include one or more interface(s) 1014. The interface(s) 1014 may be used to provide input to or output from the wireless device 1002. For example, a wireless device 1002 that is a UE may include interface(s) 1014 such as microphones, speakers, a touchscreen, buttons, and the like in order to allow for input and/or output to the UE by a user of the UE. Other interfaces of such a UE may be made up of transmitters, receivers, and other circuitry (e.g., other than the transceiver(s) 1010/antenna(s) 1012 already described) that allow for communication between the UE and other devices and may operate according to known protocols (e.g., Wi-Fi^{®}, Bluetooth^{®}, and the like).

The wireless device 1002 may include a RACH triggering module 1016. The RACH triggering module 1016 may be implemented via hardware, software, or combinations thereof. For example, the RACH triggering module 1016 may be implemented as a processor, circuit, and/or instructions 1008 stored in the memory 1006 and executed by the processor(s) 1004. In some examples, the RACH triggering module 1016 may be integrated within the processor(s) 1004 and/or the transceiver(s) 1010. For example, the RACH triggering module 1016 may be implemented by a combination of software components (e.g., executed by a DSP or a general processor) and hardware components (e.g., logic gates and circuitry) within the processor(s) 1004 or the transceiver(s) 1010.

The RACH triggering module 1016 may be used for various aspects of the present disclosure, for example, aspects of FIG. 6, FIG. 7, and/or FIG. 8. The RACH triggering module 1016 may configure the wireless device 1002 to trigger, in response to identifying a failure of a first RACH procedure for UL synchronization for an SCC and identifying that a measurement report reports an RSRP of the SCC, a second RACH procedure on the SCC for the UL synchronization for the SCC; trigger, in response to identifying a failure of a first RACH procedure for UL synchronization for an SCC and to identifying that a CSI report reports a first CSI component of the SCC that is above a threshold, a second RACH procedure on the SCC for the UL synchronization for the SCC; and/or trigger, in response to identifying a failure of a first RACH procedure for UL synchronization for an SCC and identifying that a DL throughput through the SCC has improved corresponding to a first time period, a second RACH procedure on the SCC for the UL synchronization for the SCC.

The network device 1018 may include one or more processor(s) 1020. The processor(s) 1020 may execute instructions such that various operations of the network device 1018 are performed, as described herein. The processor(s) 1020 may include one or more baseband processors implemented using, for example, a CPU, a DSP, an ASIC, a controller, an FPGA device, another hardware device, a firmware device, or any combination thereof configured to perform the operations described herein.

The network device 1018 may include a memory 1022. The memory 1022 may be a non-transitory computer-readable storage medium that stores instructions 1024 (which may include, for example, the instructions being executed by the processor(s) 1020). The instructions 1024 may also be referred to as program code or a computer program. The memory 1022 may also store data used by, and results computed by, the processor(s) 1020.

The network device 1018 may include one or more transceiver(s) 1026 that may include RF transmitter circuitry and/or receiver circuitry that use the antenna(s) 1028 of the network device 1018 to facilitate signaling (e.g., the signaling 1032) to and/or from the network device 1018 with other devices (e.g., the wireless device 1002) according to corresponding RATs.

The network device 1018 may include one or more antenna(s) 1028 (e.g., one, two, four, or more). In embodiments having multiple antenna(s) 1028, the network device 1018 may perform MIMO, digital beamforming, analog beamforming, beam steering, etc., as has been described.

The network device 1018 may include one or more interface(s) 1030. The interface(s) 1030 may be used to provide input to or output from the network device 1018. For example, a network device 1018 that is a base station may include interface(s) 1030 made up of transmitters, receivers, and other circuitry (e.g., other than the transceiver(s) 1026/antenna(s) 1028 already described) that enables the base station to communicate with other equipment in a core network, and/or that enables the base station to communicate with external networks, computers, databases, and the like for purposes of operations, administration, and maintenance of the base station or other equipment operably connected thereto.

Embodiments contemplated herein include an apparatus comprising means to perform one or more elements of any of the method 600, the method 700, and/or the method 800. This apparatus may be, for example, an apparatus of a UE (such as a wireless device 1002 that is a UE, as described herein).

Embodiments contemplated herein include one or more non-transitory computer-readable media comprising instructions to cause an electronic device, upon execution of the instructions by one or more processors of the electronic device, to perform one or more elements of any of the method 600, the method 700, and/or the method 800. This non-transitory computer-readable media may be, for example, a memory of a UE (such as a memory 1006 of a wireless device 1002 that is a UE, as described herein).

Embodiments contemplated herein include an apparatus comprising logic, modules, or circuitry to perform one or more elements of any of the method 600, the method 700, and/or the method 800. This apparatus may be, for example, an apparatus of a UE (such as a wireless device 1002 that is a UE, as described herein).

Embodiments contemplated herein include an apparatus comprising: one or more processors and one or more computer-readable media comprising instructions that, when executed by the one or more processors, cause the one or more processors to perform one or more elements of any of the method 600, the method 700, and/or the method 800. This apparatus may be, for example, an apparatus of a UE (such as a wireless device 1002 that is a UE, as described herein).

Embodiments contemplated herein include a signal as described in or related to one or more elements of any of the method 600, the method 700, and/or the method 800.

Embodiments contemplated herein include a computer program or computer program product comprising instructions, wherein execution of the program by a processor is to cause the processor to carry out one or more elements of any of the method 600, the method 700, and/or the method 800. The processor may be a processor of a UE (such as a processor(s) 1004 of a wireless device 1002 that is a UE, as described herein). These instructions may be, for example, located in the processor and/or on a memory of the UE (such as a memory 1006 of a wireless device 1002 that is a UE, as described herein).

For one or more embodiments, at least one of the components set forth in one or more of the preceding figures may be configured to perform one or more operations, techniques, processes, and/or methods as set forth herein. For example, a baseband processor as described herein in connection with one or more of the preceding figures may be configured to operate in accordance with one or more of the examples set forth herein. For another example, circuitry associated with a UE, base station, network element, etc. as described above in connection with one or more of the preceding figures may be configured to operate in accordance with one or more of the examples set forth herein.

Any of the above described embodiments may be combined with any other embodiment (or combination of embodiments), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

It should be recognized that the systems described herein include descriptions of specific embodiments. These embodiments can be combined into single systems, partially combined into other systems, split into multiple systems or divided or combined in other ways. In addition, it is contemplated that parameters, attributes, aspects, etc. of one embodiment can be used in another embodiment. The parameters, attributes, aspects, etc. are merely described in one or more embodiments for clarity, and it is recognized that the parameters, attributes, aspects, etc. can be combined with or substituted for parameters, attributes, aspects, etc. of another embodiment unless specifically disclaimed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein, but may be modified within the scope and obvious equivalents of the appended claims.

## Claims

1. A method of a user equipment (UE) that is in a radio resource control (RRC) connected mode with a network through a primary component carrier (PCC) of a first timing advance group (TAG) of the network, comprising:
identifying a first failure of a first random access channel (RACH) procedure for uplink (UL) synchronization for a secondary component carrier (SCC) of a second TAG of the network that is configured to the UE;
identifying that a first measurement report generated by the UE for the network reports a first reference signal received power (RSRP) of the SCC; and
triggering, in response to identifying the first failure of the first RACH procedure for the UL synchronization for the SCC and identifying that the first measurement report reports the first RSRP of the SCC, a second RACH procedure on the SCC for the UL synchronization for the SCC.

2. The method of claim 1, further comprising:
identifying a second failure of the second RACH procedure for the UL synchronization for the SCC;
identifying that a second measurement report generated by the UE for the network reports a second RSRP of the SCC; and
triggering, in response to identifying the second failure of the second RACH procedure for the UL synchronization for the SCC and identifying that the second measurement report reports the second RSRP of the SCC, a third RACH procedure on the SCC for the UL synchronization for the SCC.

3. An apparatus of a user equipment (UE), comprising:
a baseband processor; and
a memory storing instructions that, when executed by the baseband processor, configure the apparatus to, when the UE is in a radio resource control (RRC) connected mode with a network through a primary component carrier (PCC) of a first timing advance group (TAG) of the network:
identify a first failure of a first random access channel (RACH) procedure for uplink (UL) synchronization for a secondary component carrier (SCC) of a second TAG of the network that is configured to the UE;
identify that a first channel state information (CSI) report generated by the UE for the network reports a first CSI component for the SCC that meets a threshold; and
trigger, in response to identifying the first failure of the first RACH procedure for the UL synchronization for the SCC and to identifying that the first CSI report reports the first CSI component of the SCC that is above the threshold, a second RACH procedure on the SCC for the UL synchronization for the SCC.

4. The apparatus of claim 3, wherein the first CSI component comprises a channel quality index (CQI), the threshold comprises a CQI threshold, and the second RACH procedure is triggered in response to determining that the CQI meets the CQI threshold.

5. The apparatus of claim 3, wherein the first CSI component comprises a precoder matrix indicator (PMI), the threshold comprises a PMI threshold, and the second RACH procedure is triggered in response to determining that the PMI meets the PMI threshold.

6. The apparatus of claim 3, wherein the first CSI component comprises a rank indicator (RI), the threshold comprises an RI threshold, and the second RACH procedure is triggered in response to determining that the RI meets the RI threshold.

7. The apparatus of any preceding claim, wherein the instructions, when executed by the baseband processor, further configure the apparatus to, when the UE is in the RRC connected mode with the network through the first PCC of the first TAG of the network:
identify a second failure of the second RACH procedure for the UL synchronization for the SCC;
identify that a second CSI report generated by the UE for the network reports a second CSI component for the SCC that meets the threshold; and
trigger, in response to identifying the second failure of the second RACH procedure for the UL synchronization for the SCC and to identifying that the second CSI report reports the second CSI component for the SCC that is above the threshold, a third RACH procedure on the SCC for the UL synchronization for the SCC.

8. A non-transitory computer-readable storage medium including instructions that, when executed by one or more processors of a user equipment (UE) that is in a radio resource control (RRC) connected mode with a network through a primary component carrier (PCC) of a first timing advance group (TAG) of the network, cause the UE to:
identify a first failure of a first random access channel (RACH) procedure for uplink (UL) synchronization for a secondary component carrier (SCC) of a second TAG of the network that is configured to the UE;
identify that a downlink (DL) throughput through the SCC has improved corresponding to a first time period; and
trigger, in response to identifying the first failure of the first RACH procedure for the UL synchronization for the SCC and identifying that the DL throughput through the SCC has improved corresponding to the first time period, a second RACH procedure on the SCC for the UL synchronization for the SCC.

9. The non-transitory computer-readable storage medium of claim 8, wherein the UE identifies that the DL throughput through the SCC has improved corresponding to the first time period by:
determining a DL throughput percentage improvement of the DL throughput through the SCC corresponding to the first time period; and
determining that the DL throughput percentage improvement meets a DL throughput percentage improvement threshold.

10. The non-transitory computer-readable storage medium of claim 8 or claim 9, wherein the first time period begins at a time of the first RACH procedure.

11. The non-transitory computer-readable storage medium of any of claims 8 to 10, wherein the instructions, when executed by the one or more processors of the UE, further cause the UE to:
identify a second failure of the second RACH procedure for the UL synchronization for the SCC;
identify that the DL throughput through the SCC has improved corresponding to a second time period; and
trigger, in response to identifying the second failure of the second RACH procedure for the UL synchronization for the SCC and identifying that the DL throughput through the SCC has improved corresponding to the second time period, a third RACH procedure on the SCC for the UL synchronization for the SCC.
